# EUROPEAN PATENT SPECIFICATION

(11) **EP 3 287 681 B1**
(45) Date of publication and mention of the grant of the patent: **19.02.2020**
(21) Application number: 16186011.9
(22) Date of filing: 26.08.2016
(51) Int. Cl.: F16K 49/00, F16K 1/36, F16K 51/02

(54) **RIGHT ANGLE VALVE**
RECHTWINKLIGES VENTIL
SOUPAPE À ANGLE DROIT

(43) Date of publication of application: 28.02.2018
(73) Proprietor: King Lai Hygienic Materials Co., Ltd., 30264 Zhubei City, Hsinchu County (TW)
(72) Inventor: HUANG, Chi-Che, 30264 Zhubei City, Hsinchu County (TW)
(74) Representative: Straus, Alexander

(56) References cited:
- EP-A1- 0 780 615
- WO-A2-2009/126578
- US-A1- 2003 178 064
- US-A1- 2008 173 842
- US-A1- 2012 126 159

## Description

### BACKGROUND OF THE INVENTION

### 1. Field of the Invention:

The present invention relates to right angle valves, and more particularly, to a right angle valve capable of covering the disc spring in order to prevent the disc spring from being stuck by other objects and facilitate the position recovering operation thereof.

### 2. Description of the Related Art:

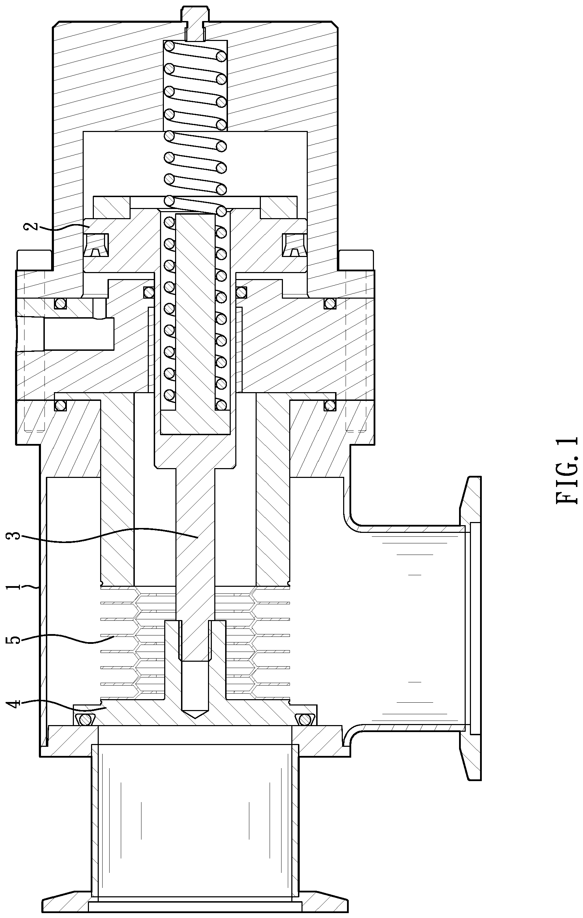

Referring to **Fig. 1****,** a sectional view of a known right angle valve is shown. The known right angle valve is used to adjusting or block the air flowing in a vacuum system. The known right angle valve often includes a three way pipe **1,** a piston **2,** a controlling shaft **3,** and a valve plate **4.** The piston **2** is movably disposed on one end of the three way pipe **1.** One end of the controlling shaft **3** is connected to the piston **2,** with the other end thereof connected to the valve plate **4** for controlling the valve plate **4** to open or close the three way pipe **1.** Also, a disc spring **5** is disposed between the valve plate **4** and the controlling shaft **3,** so as to provide a position recovering force to the piston **2.**

When the piston **2** is driven due to an air pressure, the piston **2** forces the controlling shaft **3** to move, thereby triggering the valve plate **4** to allow the connection in the three way pipe **1;** at the meantime, the disc spring 5 is compressed. When the air pressure is removed, with the resilient force provided by the disc spring **5,** the piston **2** moves to make the valve plate **4** block the connection in the three way pipe **1.** With such operation, the air inflow and outflow are achieved. However, during the air inflow and outflow, the air might contain a certain amount of impurities, foreign matter, or dust, such objects are easily stuck on or attached to the disc spring **5.** As a result, the movement of the disc spring **5** is kept from being facilitate, failing to accomplish a compete position recovering operation.

A right angle valve provided with a flexible bellows is disclosed in US2008/173842, US2012/126159, EP0780615 and WO2009/126578, respectively. When the piston in the valve body is driven to open or close the three way pipe, the disc spring is covered in the bellows and not being exposed.

### SUMMARY OF THE INVENTION

For improving such issues, the present invention discloses a right angle valve, which applies a covering measure to cover the disc spring when the air inflow is permitted, so as to prevent the disc spring from being stuck by foreign objects and facilitate the operation thereof, in accordance to claim 1.

For achieving the aforementioned objectives, the present invention provides a right angle valve, comprising:
a valve body including a cavity and a first pipe and a second pipe that are connected with the cavity;
a fixing member fixed to the valve body, the fixing member provided with a combining end inserted into the cavity;
a disc spring with one end combined to the combining end and the other end connected with a sealing member for sealing an inner end of the first pipe;
a cover fixed to an end of the valve body away from the first pipe;
a piston member slidingly disposed in the cover, one end of the piston member combined to the sealing member; and
a covering measure, the covering measure covering the disc spring when the piston member drives the sealing member to move away from the inner end of the first pipe in order to allow an air inflow, such that the disc spring is prevented from being exposed to the flowing air and prevented from being stuck or attached by foreign objects.

The covering measure includes a sleeve provided with a fixing end and a free end. The fixing end is fixedly combined with the fixing member, and the free end surrounds the combining end of fixing member and the disc spring.

When the sealing member moves away from the inner end of the first pipe to the largest distance, the sealing member rests against the free end.

The covering measure includes a sleeve that is fixedly combined with the sealing member and surrounds the disc spring.

In an embodiment of the present invention, the cover is provided with an inner space, and the piston member has a piston body slidingly disposed in the inner space. In addition, an air inflow portion is disposed at the cover adjacent to the valve body, and the air inflow portion is connected with the inner space.

In an embodiment of the present invention, the piston body is connected with a controlling shaft. The controlling shaft passes through the fixing member and is connected with the sealing member.

In an embodiment of the present invention, the piston body is concavely provided with a spring recess; the cover is provided with a sealed end; a spring is disposed between the spring recess and the sealed end.

In an embodiment of the present invention, a positioning member is inserted in the spring.

In an embodiment of the present invention, the sealed end of the cover is provided with a silencing member, wherein the inner end of the silencing member contacts the inner space.

In an embodiment of the present invention, a heating device is further provided for heating the valve body.

In an embodiment of the present invention, a heat insulating plate is further provided and disposed between the valve body and the cover.

With such configuration, through the covering measure, when the sealing member opens to allow the air flow, the disc spring is covered in the sleeve, so as to prevent the disc spring from being stuck or attached by foreign matters or objects, thereby avoid the incompletion of the disc spring movement.

Furthermore, the heating device is used to heat the valve body, such that when the first pipe is opened, the micro-size foreign matters or objects are burned by the high temperature heat. Therefore, the foreign objects are unable to be accumulated in the pipe.

### BRIEF DESCRIPTION OF THE DRAWINGS

**Fig. 1** is a sectional view of a known right angle valve.
**Fig. 2** is a sectional view of a right angle valve in accordance with an embodiment of the present invention, illustrating the first pipe being blocked.
**Fig. 3** is a sectional view of the right angle valve in accordance with an embodiment of the present invention, illustrating the first pipe being gradually opened.
**Fig. 4** is a sectional view of the right angle valve in accordance with an embodiment of the present invention, illustrating the first pipe being completely opened and the disc spring being covered.
**Fig. 5** is a sectional view of the right angle valve in accordance with a second embodiment of the present invention, illustrating the first pipe being blocked and the sleeve being fixedly combined with the sealing member.
**Fig. 6** is a sectional view of the right angle valve in accordance with the second embodiment of the present invention, illustrating the first pipe being completely opened and the disc spring being covered.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

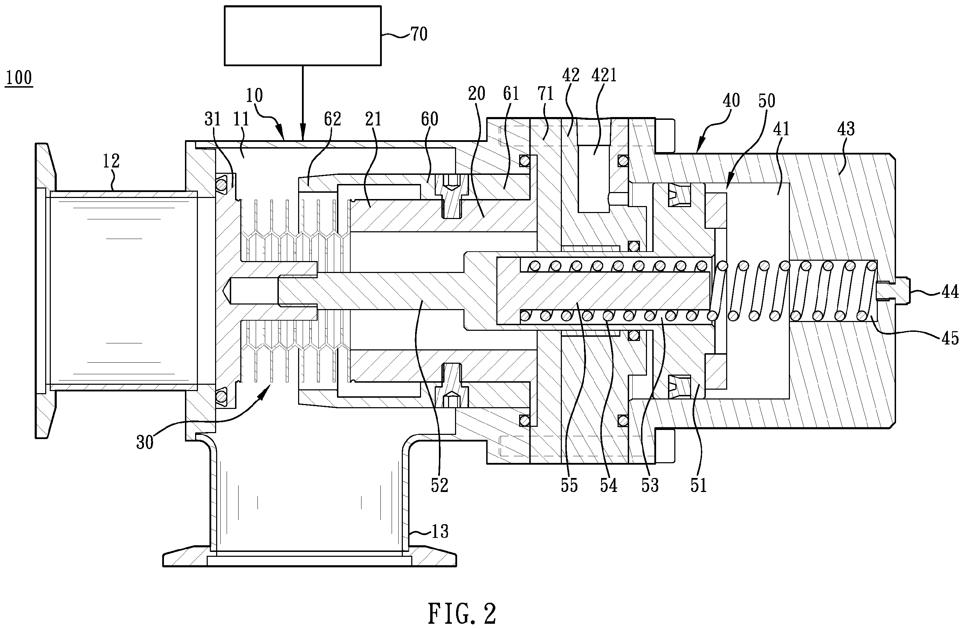

Referring to **Fig. 2** to **Fig. 4****,** the right angle valve **100** provided by an embodiment of the present invention comprises a valve body **10,** a fixing member **20,** a disc spring **30,** a cover **40,** and a piston member **50.**

The valve body **10** is a three way pipe, comprising a cavity **11** and a first pipe **12** and a second pipe **13** that are connected with the cavity **11.** The first pipe **12** and the cavity **11** are arranged in an axial alignment. The first pipe **12** and the second pipe **13** form a right angle arrangement.

The fixing member **20** is formed in a barrel shape structure and fixed on one end of the valve body **10** away from the first pipe **12.** The fixing member **20** is provided with a combining end **21** inserted into the cavity **11.**

The disc spring **30** has one end thereof combined with a combining end **21** of the fixing member **20,** while the other end thereof is connected with a sealing member **31** for sealing the inner end of the first pipe **12,** so as to optionally open or close to allow or block the connection between the first pipe **12** and the cavity **11.**

The cover **40** is fixed on one end of the valve body **10** away from the first pipe **12** and arranged on the outer side of the fixing member **20.** The cover **40** includes an inner space **41.** An air inflow portion **42** is disposed on the cover **40** adjacent to the valve body **10.** The air inflow portion **42** comprises an air inlet **421** which is connected with the inner space **41** for contacting an outer air source, such that the air is input into the inner space **41.** Furthermore, one end of the cover **40** away from the air inflow portion **42** is provided with a sealed end **43.** The sealed end **43** includes a silencing member **44,** wherein the inner end of the silencing member **44** is connected with the inner space **41** for balancing the inner pressure and the outer pressure of the cover **40.** In addition, the sealed end **43** of the cover **40** is provided with a positioning recess **45** which is connected with the inner space **41** and the inner end of the silencing member **44.**

The piston member **50** is slidingly disposed inside the cover **40.** In an embodiment of the present invention, the piston member **50** includes a piston body **51** which is slidingly disposed in the inner space **41.** The piston body **51** is combined with a controlling shaft **52.** The controlling shaft **52** pass through the air inflow portion **42** and the fixing member **20,** wherein one end of the controlling shaft **52** is combined with the sealing member **31.** When the piston member **50** moves, the sealing member **31** optionally opens or closes the first pipe **12.** Further, the piston body **51** is axially and concavely provided with a spring recess **53** which receives a spring **54,** such that the spring **54** is disposed between the spring recess **53** and the positioning recess **45** of the sealed end **43,** thereby providing the recovering function of the piston member **50.** In addition, a positioning member **55** is disposed in the spring recess **53,** and the positioning member **55** is formed in a T shape, so as to be inserted into the spring **54** in order to position the spring **54.**

An embodiment of the present invention further comprises a covering measure. When the piston member **50** drives the sealing member **31** to move away from the inner end of the first pipe **12** and enables the air to flow, the disc spring **30** is covered, so that the disc spring **30** is prevented from being exposed to the flowing air. As a result, the disc spring **30** is not stuck and attached by foreign objects or dust in the air, facilitating the normal operation of the disc spring **30.**

The covering measure includes a sleeve **60,** which comprises a fixing end **61** and a free end **62.** The sleeve **60** is mounted around the fixing member **20,** such that the fixing end **61** is fastened with the fixing member **20** by use of screws or bolts, and the free end **62** surrounds the combining end **21** of the fixing member **20** and the disc spring **30.** Also, the outer diameter of the free end **62** of the sleeve **60** is substantially equal to the outer diameter of the sealing member **31.** When the sealing member **31** moves away from the inner end of the first pipe **12** to the largest distance, one end of the sealing member **31** away from the inner side of the first pipe **12** contacts the free end **62,** forming a blockage status. Also, the sealing member **31** seals the free end **62** of the sleeve **60,** whereby the disc spring **30** is completely compressed into the sleeve **60.** Therefore, a covering and protecting effect is provided upon the disc spring **30.**

Furthermore, an embodiment of the present invention includes a heating device **70,** which heats the valve body **10** by in a contact or non-contact manner. By use of heating, when the first pipe **12** is opened, the micro size foreign objects or matters are burned in a high temperature environment. Therefore, foreign objects do not stick or accumulate in the pipe.

Also, a heat insulating plate **71** is disposed between the valve body **10** and the cover **40.** When the heating device **70** heats the valve body **10,** the heat is transmitted to the cover **40,** so as to prevent the adverse effects due to the operation of the piston member **50** and the air leakage from happening.

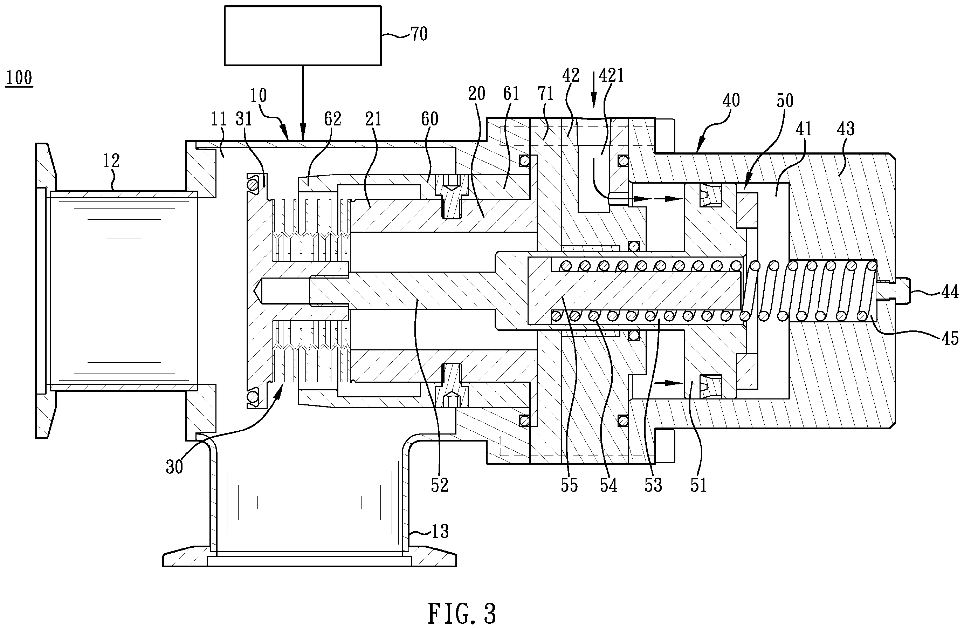

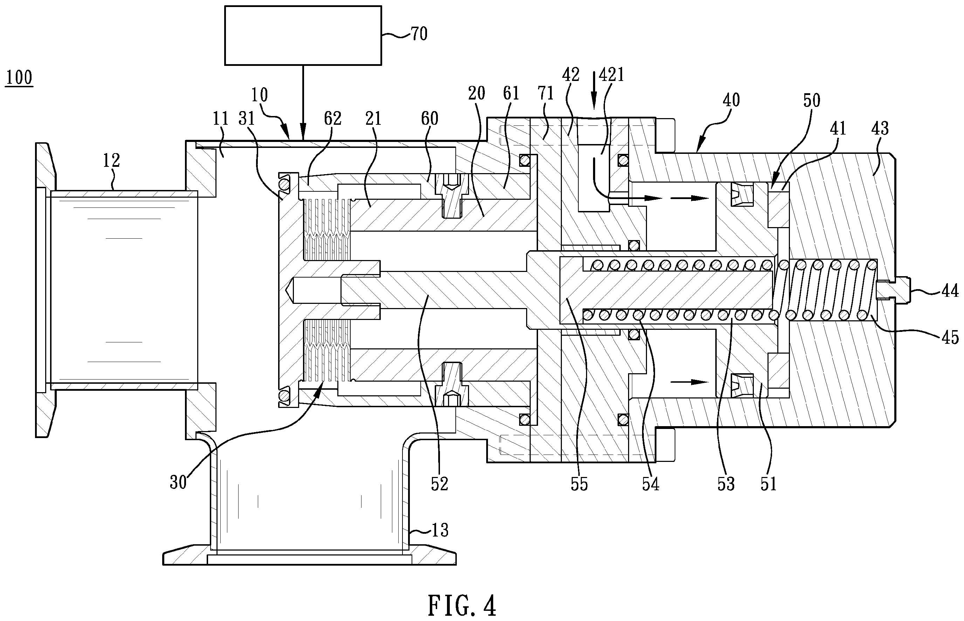

Referring to **Fig. 3** and **Fig. 4****,** the piston member **50** moves to open the first pipe **12.** As shown by **Fig. 3****,** by inputting a high pressure air from the outside, when the piston member **50** pushes the piston body **51** to move toward the sealed end **43** of the cover **40,** the piston body **51,** by use of the controlling shaft **52,** drives the sealing member 31 to gradually move away from the inner end of the first pipe **12,** whereby the connection between the first pipe **12** and the second pipe **13** is established. At the meantime, the disc spring **30** bears a force to be compressed. As shown by **Fig. 4****,** when the piston body **51** reaches the movement limitation, the first pipe **12** is completely opened, and the inner surface of the sealing member **31** rests against the free end **62** of the sleeve **60** to form a blockage structure, such that the disc spring **30** is completely covered in the sealing member **31** and the sleeve **60.** Therefore, when the air is flowing, the disc spring **30** is prevented from being exposed in the flowing air, whereby the disc spring **30** is not stuck and attached by foreign objects and dust in the air, thus facilitating the normal operation of the disc spring **30.** Further, when the valve is closed to block the high pressure air from the outside, by use of the resilient force provided by the disc spring 30 and the spring **54,** the position of the piston member **50** is recovered, such that the first pipe **12** is blocked by the sealing member **31** to block the flowing air.

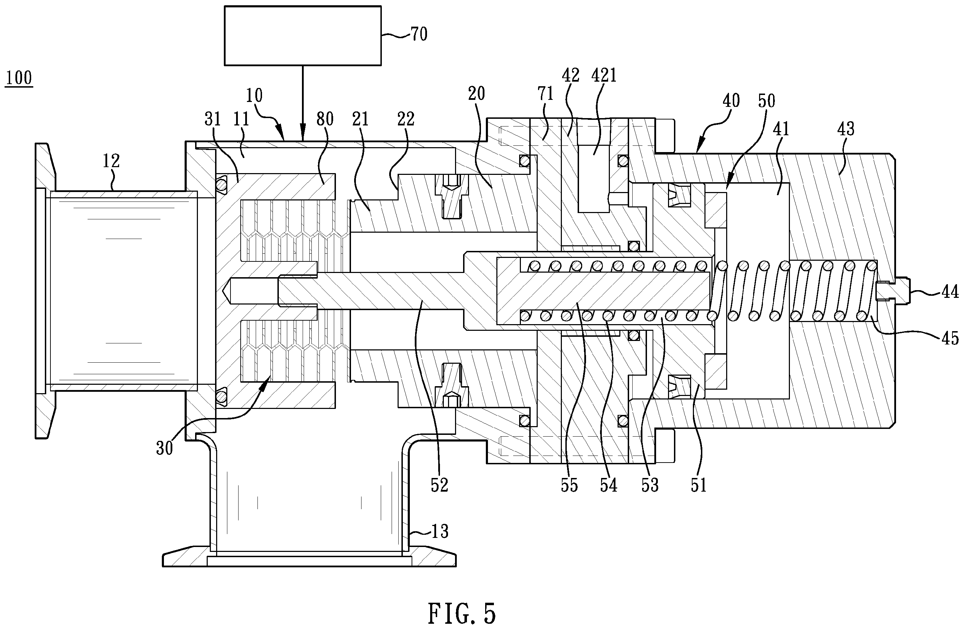

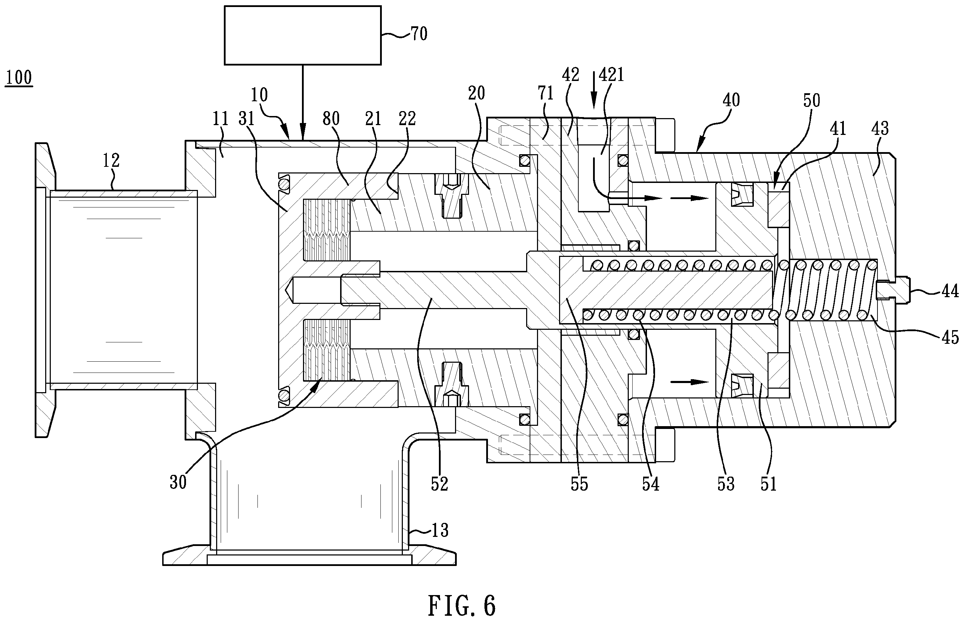

Referring to **Fig. 5** and **Fig. 6** illustrating another embodiment of the present invention, the elements/structures identical and similar to the corresponding elements cited in the previous drawing are marked with identical numberings. The covering measure includes a sleeve **80** which is fixedly combined with the sealing member **31** and surrounds the disc spring **30.** The sleeve **80** is allowed to be integrally formed with the sealing member **31.** Also, the combining end **21** of the fixing member **20** is provided with a held portion **22.** When the piston member **50** drives the sealing member **31** to open against the first pipe **12,** the sleeve **80** gradually moves along with the sealing member **31** toward the fixing member **20;** when the sealing member **31** is completely open against the first pipe **12,** the sleeve **80** rests against the held portion **22** of the fixing member **20,** whereby the disc spring **30** is completely covered, achieving the aforementioned covering and protecting effect.

To sum up, by use of the covering measure, when the sealing member **31** opens to allow the air flowing, the disc spring **30** is covered in the sleeve **60** or sleeve **80,** such that the disc spring **30** is prevented from being stuck or attached by foreign objects in the flowing air, assuring the normal operation of the disc spring **30.**

Furthermore, through the heating device **70** heating the valve body **10,** when the first pipe **12** is opened, the foreign matters or objects in the valve body **10** are burned by the high temperature heat, preventing the foreign objects from sticking or accumulating in the pipe.

Although particular embodiments of the invention have been described in detail for purposes of illustration, various modifications and enhancements may be made without departing from the scope of the invention. Accordingly, the invention is not to be limited except as by the appended claims.

## Claims

1. A right angle valve (100), comprising:
a valve body (10) including a cavity (11) and a first pipe (12) and a second pipe (13) connected with the cavity (11);
a fixing member (20) fixed to the valve body (10), the fixing member (20) provided with a combining end (21) inserted into the cavity (11);
a disc spring (30) with one end thereof combined to the combining end (21) and the other end thereof connected with a sealing member (30) for sealing an inner end of the first pipe (12);
a cover (40) fixed to an end of the valve body (10) away from the first pipe (12);
a piston member (50) slidingly disposed in the cover (40), one end of the piston member (50) combined to the sealing member (31); and
a covering measure including a sleeve (60), wherein the covering measure covers the disc spring (30) when the piston member (50) drives the sealing member (31) to move away from the inner end of the first pipe (12) to allow an air inflow, such that the disc spring (30) is prevented from being exposed to the flowing air,
**characterized in that**
the sleeve (60) comprises a fixing end (61) and a free end (62), the fixing end (61) fixedly combined with the fixing member, the free end (62) surrounding the combining end (21) of the fixing member (20) and the disc spring (30), wherein the sealing member (31) rests against the free end (62) when the sealing member (31) moves away from the inner end of the first pipe (12) to the largest distance.

2. The right angle valve (100) of claim 1, wherein the fixing end (61) is fastened with the fixing member (20).

3. The right angle valve (100) of claim 1, wherein the cover (40) is provided with an inner space (41), the piston member (50) includes a piston body (51) slidingly disposed in the inner space (41), and an air inflow portion (42) connected with the inner space (41) is disposed at the cover (40) adjacent to the valve body (10).

4. The right angle valve (100) of claim 3, wherein the piston body (51) is connected with a controlling shaft (52), the controlling shaft (52) passing through the fixing member (20) and is connected with the sealing member (31).

5. The right angle valve (100) of claim 3, wherein the piston body (51) is concavely provided with a spring recess (53), the cover (40) is provided with a sealed end (43), and a spring (54) is disposed between the spring recess (53) and the sealed end (43).

6. The right angle valve (100) of claim 5, wherein a positioning member (55) is disposed in the spring recess (53) to be inserted in the spring (54).

7. The right angle valve (100) of claim 5, wherein the sealed end (43) of the cover (40) is provided with a silencing member (44), wherein an inner end of the silencing member (44) contacts the inner space (41).

8. The right angle valve (100) of claim 1, further comprising a heating device (70) for heating the valve body (10).

9. The right angle valve (100) of claim 8, further comprising a heat insulating plate 71) disposed between the valve body (10) and the cover (40).

## Patentansprüche

1. Rechtwinkliges Ventil (100), welches umfasst:
einen Ventilkörper (10), der einen Hohlraum (11) und ein erstes Rohr (12) und ein zweites Rohr (13) umfasst, die mit dem Hohlraum (11) verbunden sind;
ein Befestigungselement (20), das mit dem Ventilkörper (10) befestigt ist, worin das Befestigungselement (20) mit einem in den Hohlraum (11) eingesetzten Verbindungsende (21) versehen ist;
eine Tellerfeder (30), die mit einem Ende mit dem Verbindungsende (21) verbunden und dem anderen Ende zum Abdichten eines inneren Endes des ersten Rohres (12) mit einem Dichtungsteil (31) verbunden ist;
eine Abdeckung (40), die an einem Ende des Ventilkörpers (10) von dem ersten Rohr (12) weg befestigt ist;
ein Kolbenelement (50), das in der Abdeckung (40) gleitend angeordnet ist, worin ein Ende des Kolbenelements (50) mit dem Dichtungsteil (31) verbunden ist; und
ein Abdeckungsmittel, das eine Hülse (60) umfasst, worin das Abdeckungsmittel die Tellerfeder (30) bedeckt, wenn das Kolbenelement (50) das Dichtungsteil (31) antreibt, sich von dem inneren Ende des ersten Rohres (12) weg zu bewegen, um einen Lufteinstrom derart zu ermöglichen, dass verhindert wird, dass die Tellerfeder (30) der strömenden Luft ausgesetzt wird,
**dadurch gekennzeichnet, dass**
die Hülse (60) ein Befestigungsende (61) und ein freies Ende (62) umfasst, das Befestigungsende (61) mit dem Befestigungselement fest verbunden ist, das freie Ende (62) das Verbindungsende (21) des Befestigungselements (20) und die Tellerfeder (30) umgibt, worin das Dichtungsteil (31) gegen das freie Ende (62) aufliegt, wenn sich das Dichtungsteil (31) von dem inneren Ende des ersten Rohres (12) zu der größten Entfernung weg bewegt.

2. Rechtwinkliges Ventil (100) nach Anspruch 1, worin das Befestigungsende (61) mit dem Befestigungselement (20) befestigt ist.

3. Rechtwinkliges Ventil (100) nach Anspruch 1, worin die Abdeckung (40) mit einem inneren Raum (41) versehen ist, worin das Kolbenelement (50) einen gleitend in dem inneren Raum (41) angeordneten Kolbenkörper (51) umfasst, und worin ein mit dem inneren Raum (41) verbundener Lufteinstrombereich (42) an der Abdeckung (40) benachbart zu dem Ventilkörper (10) angeordnet ist.

4. Rechtwinkliges Ventil (100) nach Anspruch 3, worin der Kolbenkörper (51) mit einem Steuerschaft (52) verbunden ist, worin der Steuerschaft (52) durch das Befestigungselement (20) geht und mit dem Dichtungsteil (31) verbunden ist.

5. Rechtwinkliges Ventil (100) nach Anspruch 3, worin der Kolbenkörper (51) mit einer Federaussparung (53) ausgehöhlt vorgesehen ist, die Abdeckung (40) mit einem dichten Ende (43) versehen ist, und eine Feder (54) zwischen der Federaussparung (53) und dem dichten Ende (43) angeordnet ist.

6. Rechtwinkliges Ventil (100) nach Anspruch 5, worin ein Anordnungselement (55) in der Federaussparung (53) angeordnet ist, um in die Feder (54) eingesetzt zu werden.

7. Rechtwinkliges Ventil (100) nach Anspruch 5, worin das dichte Ende (43) der Abdeckung (40) mit einem Schalldämpfungselement (44) versehen ist, worin ein inneres Ende des Schalldämpfungselementes (44) mit dem inneren Raum (41) in Kontakt steht.

8. Rechtwinkliges Ventil (100) nach Anspruch 1, welches weiter eine Heizeinrichtung (70) zum Heizen des Ventilkörpers (10) umfasst.

9. Rechtwinkliges Ventil (100) nach Anspruch 8, welches weiter eine Wärmeisolationsplatte (71) umfasst, die zwischen dem Ventilkörper (10) und der Abdeckung (40) angeordnet ist.

## Revendications

1. Soupape à angle droit (100) comprenant :
un corps de soupape (10) comprenant une cavité (11) ainsi qu'un premier tuyau (12) et un deuxième tuyau (13) reliés à la cavité (11) ;
un élément de fixation (20) fixé au corps de soupape (10), l'élément de fixation (20) étant pourvu d'une extrémité de combinaison (21) introduite dans la cavité (11) ;
un ressort à disque (30) dont une extrémité est combinée à l'extrémité de combinaison (21) et dont l'autre extrémité est reliée à un élément d'étanchéité (30) pour fermer de manière étanche une extrémité interne du premier tuyau (12) ;
un couvercle (40) fixé à une extrémité du corps de soupape (10) à l'opposé du premier tuyau (12) ;
un élément de piston (50) disposé de façon coulissante dans le couvercle (40), une extrémité de l'élément de piston (50) étant combinée à l'élément d'étanchéité (31) ; et
une mesure de recouvrement comprenant un manchon (60), la mesure de recouvrement recouvrant le ressort à disque (30) lorsque l'élément de piston (50) entraîne l'élément d'étanchéité (31) à s'éloigner de l'extrémité interne du premier tuyau (12) pour permettre un flux entrant d'air, de telle sorte que la soumission du ressort à disque (30) à l'air qui s'écoule est empêchée,
**caractérisée en ce que**
le manchon (60) comprend une extrémité de fixation (61) et une extrémité libre (62), l'extrémité de fixation (61) étant associée de manière fixe à l'élément de fixation, l'extrémité libre (62) entourant l'extrémité de combinaison (21) de l'élément de fixation (20) et le ressort à disque (30), l'élément d'étanchéité (31) reposant contre l'extrémité libre (62) lorsque l'élément d'étanchéité (31) s'éloigne de l'extrémité interne du premier tuyau (12) à la plus grande distance.

2. Soupape à angle droit (100) selon la revendication 1, l'extrémité de fixation (61) étant fixée à l'élément de fixation (20).

3. Soupape à angle droit (100) selon la revendication 1, le couvercle (40) étant pourvu d'un espace interne (41), l'élément de piston (50) comprenant un corps de piston (51) disposé de façon coulissante dans l'espace interne (41) et une partie de flux entrant d'air (42) reliée à l'espace interne (41) étant disposée au niveau du couvercle (40) à côté du corps de soupape (10).

4. Soupape à angle droit (100) selon la revendication 3, le corps de piston (51) étant relié à un arbre de commande (52), l'arbre de commande (52) passant à travers l'élément de fixation (20) et étant relié à l'élément d'étanchéité (31).

5. Soupape à angle droit (100) selon la revendication 3, le corps de piston (51) étant pourvu de manière concave d'un évidement de ressort (53), le couvercle (40) étant pourvu d'une extrémité fermée de manière étanche (43) et un ressort (54) étant disposé entre l'évidement de ressort (53) et l'extrémité fermée de manière étanche (43).

6. Soupape à angle droit (100) selon la revendication 5, un élément de positionnement (55) étant disposé dans l'évidement de ressort (53) pour être introduit dans le ressort (54).

7. Soupape à angle droit (100) selon la revendication 5, l'extrémité fermée de manière étanche (43) du couvercle (40) étant pourvue d'un élément de silencieux (44), une extrémité interne de l'élément de silencieux (44) étant en contact avec l'espace interne (41).

8. Soupape à angle droit (100) selon la revendication 1, comprenant en outre un dispositif de chauffage (70) pour chauffer le corps de soupape (10).

9. Soupape à angle droit (100) selon la revendication 8, comprenant en outre une plaque d'isolation thermique (71) disposée entre le corps de soupape (10) et le couvercle (40).
